(19) Europäisches Patentamt
European Patent Office
Office européen des brevets

(11) **EP 4 672 031 A1**

(12) **EUROPEAN PATENT APPLICATION**

(43) Date of publication:
**31.12.2025 Bulletin 2026/01**

(21) Application number: **25185059.0**

(22) Date of filing: **24.06.2025**

(51) International Patent Classification (IPC):
$G06F\ 16/9032$ (2019.01)  $G06N\ 3/045$ (2023.01)
$G06N\ 3/08$ (2023.01)  $G06V\ 10/82$ (2022.01)
$G06V\ 20/40$ (2022.01)  $G06N\ 3/084$ (2023.01)
$G06N\ 3/09$ (2023.01)  $G06N\ 3/0464$ (2023.01)

(52) Cooperative Patent Classification (CPC):
G06F 16/9032; G06N 3/04; G06N 3/044;
G06N 3/045; G06N 3/0455; G06N 3/0464;
G06N 3/048; G06N 3/08; G06N 3/082; G06N 3/084;
G06N 3/09; G06N 3/0985; G06N 5/01; G06N 5/041;
G06V 10/82;  (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.06.2024 US 202463663643 P**

(71) Applicant: **Google LLC
Mountain View, CA 94043 (US)**

(72) Inventors:
• **BUCH, Shyamal Deep**
**75009 Paris (FR)**
• **NAGRANI, Arsha**
**Mountain View, 94043 (US)**
• **ARNAB, Anurag**
**75009 Paris (FR)**
• **SCHMID, Cordelia Luise**
**75009 Paris (FR)**

(74) Representative: **Thornliey, Peter
Venner Shipley LLP
200 Aldersgate
London EC1A 4HD (GB)**

(54) **ADAPTIVE SAMPLE SELECTION FOR DATA ITEM PROCESSING**

(57) Methods, systems, and apparatuses, including computer programs encoded on computer storage media, for receiving a query relating to a data item that includes multiple data item samples and processing the query and the data item to generate a response to the query. In particular, the described techniques include adaptively selecting a subset of the data item samples using a selection neural network conditioned on features of the data item samples and the query. Then processing the subset and query using a downstream task neural network to generate a response to the query. By adaptively selecting the subset of data item samples according to the query, the described techniques generate responses to queries that are more accurate and require less computation resources than would be the case using other techniques.

FIG. 1A

EP 4 672 031 A1

(52) Cooperative Patent Classification (CPC): (Cont.)
  **G06V 20/46**

**Description**

BACKGROUND

This specification relates to processing inputs using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current value inputs of a respective set of parameters.

SUMMARY

This specification describes a system implemented as computer programs on one or more computers in one or more locations that receives a query relating to a data item that includes multiple data item samples and processes the query and the data item to generate a response to the query.

Particular embodiments of the subject matter described in this specification can be implemented so as to realize one or more of the following advantages.

Neural network systems have shown significant promise in effectively performing tasks that require generating responses to input queries about data items that include many different data item samples. For example, video-language models have shown promise for addressing a range of multimodal tasks for video understanding, such as video question-answering.

However, the inherent computational challenges of processing data items with a large number of data item samples, e.g., long video data, and increasing model sizes, have led to standard approaches that are limited by the number of data item samples, e.g., video frames, they can process. That is, existing approaches are either extremely computationally expensive, or can only process inputs with a relatively small number of data item samples, or both.

Existing approaches attempt to ameliorate the issues of processing large number of data item samples by, e.g., sampling the data item samples uniformly, or selecting a fixed size subset of the data item samples, e.g., selecting the top-k data item samples according to respective generated scores.

While approaches that sample data item samples uniformly are straightforward, often this downsampling ignores the nuances of the fundamental nature of the data item. For example, video data items include highly correlated video frame data item samples and depict many events, from which only a few may be semantically relevant to a task regarding the video. Thus, uniformly downsampling a data item can potentially result in data item samples that are either redundant, or irrelevant, with respect to a query regarding the data item.

Approaches that attempt to select a subset of data item samples are often limited by 1) having a computational cost on par with performing the downstream task of generating a response to query and 2) pick a fixed number of data item samples regardless of the nature of the data item. The first limitation often results in an approach that is much too computationally expensive in practice. The second limitation often results in variable performances of the downstream task, depending on if the fixed number of data items are sufficient for the data item and accompanying query regarding the data item.

This specification describes techniques that can address the aforementioned challenges/limitations. That is, this specification describes techniques that can adaptively select which, and how many, data item samples will be processed by the task neural network for a given input query.

In particular, this specification describes techniques that include processing a query and a data item using a selection neural network to generate a set of selection scores that include respective selection scores for the data item samples and for placeholder samples. The described techniques then include selecting a subset of the data item samples using the set of selection scores, and then processing the query and the selected subset of data item samples using a task neural network to generate a response to the query.

By processing both the data item samples and query to generate selection scores using the selection neural network, the selection score of each data item sample reflects the degree of semantic relevance the data item sample has to the query. By also generating selection scores for placeholder samples, the selection scores of placeholder samples can serve as baselines during the selection of the subset of data item samples. For example, selection scores for data item samples that are below that of a placeholder sample are less likely to be semantically relevant to the query, and so selecting only the highest scoring samples that are data item samples is likely to result in a subset of data item samples that are semantically relevant to the query. Due to the dynamic nature of different pairs of queries and data items yielding different sets of selection scores, selecting a subset of data item samples based on the set of selection scores yields subsets of selected data item samples with variable number of data item samples. Thus, the described techniques can adaptively select only the most relevant data item samples to the query for the downstream task.

As a result of the flexible and adaptive selection, the described techniques can improve the accuracy of the task neural network while significantly reducing the number of downstream processed data item samples, significantly improving the computational efficiency of existing techniques. That is, because the downstream task neural network for the described techniques only processes the selected subset of data item samples, the task neural network utilizes only the most informative data item samples for the downstream task, improving the performance of the task neural network while also reducing undue processing cost for the task neural network.

For example, consider a video data item containing hundreds of video frames (i.e., data item samples) but only one video frame is relevant to a question-answering query. The described techniques can process the single relevant video frame using the task neural network, while other techniques (e.g., uniformly downsampling video frames or selecting a fixed number of relevant video frames) would process unnecessary additional video frames that introduces noise that degrades the performance of the task neural network and introduces additional computational processing.

As another result of the flexible and adaptive selection, the described techniques generalize better by selecting the subset of data item samples on a case-by-case basis of data item - query pairs, enabling use with data item - query pairs that have a range of the number of relevant data item samples per query. Whereas other techniques may perform adequately for sets of data item - query pairs that have low variance of number of relevant data item samples but fail when the number of relevant data item samples varies greatly.

For example, for a set of data item - query pairs where the relevant data item samples to the query can vary from 1 - 10, the described techniques can adaptively select the relevant data item samples on a case-by-case basis of data item - query pairs. But other techniques (e.g., uniformly downsampling video frames or selecting a fixed number of relevant video frames) would most often needlessly include more or inadvertently omit data item samples that are needed for the task. As noted above, this can result in unnecessary resource usage or reduced accuracy.

The details of one or more embodiments of the subject matter of this specification are set forth in the accompanying drawings and the description below.

According to a first aspect there is provided a method performed by one or more computers. The method includes receiving a query relating to a data item, where the data item includes a plurality of data item samples. The method next includes processing the query and the plurality of data item samples using a selection neural network to generate a set of selection scores. The set of selection scores includes a respective selection score for each of a set of expanded samples that includes the plurality of data item samples and for each of a set of placeholder samples that are independent of the data item. Then, the method includes selecting, using the set of selection scores, a subset of the plurality of data item samples that has an adaptive number of data item samples that is less than a total number of data item samples in the plurality of data item samples. Then lastly, the method includes processing the query and the selected subset of data item samples using a task neural network to generate a response to the query.

In some cases, the data item is a video and the plurality of data item samples are video frames from the video.

In some implementations, the query is a query for a video understanding task and the response is an output for the video understanding task.

In some implementations, the video understanding task is a video question answering task, the query represents a question about the video, and the response is a response to the question represented by the query.

In some cases, the query includes a set of candidate answers to the question about the video and the response identifies one of the candidate answers.

In some cases, the video understanding task is a video classification task.

In some cases, the query identifies a plurality of classes, and the response identifies one or more of the plurality of classes.

In some cases, the plurality of classes include a plurality of object classes that each represent a different class of object that can be depicted in the video.

In some cases, the plurality of classes include a plurality of action classes that each represent a different class of actions that can be performed by an agent depicted in the video.

In some cases, the data item is an audio signal and the plurality of data item samples are audio samples.

In some cases, the query is a query for an audio understanding task and the response is an output for the audio understanding task.

In some cases, the audio understanding task is an audio classification task.

In some cases, the data item is a sequence of point clouds and the plurality of data item samples are respective point clouds from the sequence.

In some cases, the query is a query for a point cloud understanding task and the response is an output for the point cloud understanding task.

In some cases, the point cloud understanding task is a point cloud classification task.

In some cases, the data item is a volumetric image and the plurality of data item samples are respective image slices from the volumetric image.

In some cases, the query is a query for an image understanding task and the response is an output for the image understanding task.

In some cases, the image understanding task is an image classification task.

In some cases, selecting, using the set of selection scores, a subset of the plurality of data item samples that has an adaptive number of data item samples that is less than a total number of data item samples in the plurality of data item samples includes identifying, as initial samples, a first set of expanded samples from the set of expanded samples that have the highest selection scores. Then, selecting, as the subset of the plurality of data item samples, each data item sample that is in the first set of expanded samples.

In some implementations, the first set of expanded samples includes a fixed number of expanded samples that does not vary across different data items and queries.

In some implementations, the set of placeholder samples includes a fixed number of placeholder samples that does not vary across different data items and queries.

In some cases, processing the query and the plurality of data item samples using a selection neural network to generate a set of selection scores includes obtaining respective features of each of the data item samples. Then, obtaining one or more features of the query. Then next, processing an encoder input that includes the features of each of the data item samples and the one or more features of the query using a selector encoder neural network to generate an encoder output comprising a respective encoded feature for each of the data item samples. Then lastly, processing a scoring input comprising the respective encoded features for each of the data item samples using a scoring neural network to generate the set of selection scores.

In some implementations, the selector encoder neural network is an attention-based neural network that includes one or more attention layers.

In some implementations, the scoring neural network is a multi-layer perceptron (MLP).

In some implementations, the encoder input further includes respective features of each of the placeholder samples, the encoder output further includes a respective encoded feature of each of the placeholder samples, and the scoring input further includes the respective encoded features for the placeholder samples.

In some implementations, the task neural network and the selection neural network have been trained jointly on a loss function that measures a quality of training responses generated by the task neural network in response to training queries relating to training data items.

In some cases, the joint training includes backpropagating gradients through the task neural network and into the selection neural network using a straight-through estimator (STE).

In some implementations, when the data item is a video and the plurality of data item samples are video frames from the video, the task neural network is a vision-language model (VLM) neural network.

In some implementations, the task neural network is a multi-modal language (MLM) neural network that processes a sequence of tokens selected from a vocabulary of tokens to generate, as output, a sequence of tokens from the vocabulary.

According to a second aspect, there is provided the methods of the first aspect performed by a system comprising one or more computers and one or more storage devices storing instructions that when executed by the one or more computers cause the one or more computers to perform the operations of the respective method.

According to a third aspect, there is provided the methods of the first aspect performed by one or more computer storage media storing instructions that when executed by one or more computers cause the one or more computers to perform the operations of the respective method.

Other features, aspects, and advantages of the subject matter will become apparent from the description, the drawings, and the claims.

BRIEF DESCRIPTION OF THE DRAWINGS

FIG. 1A shows a neural network system.
FIG. 1B shows an example of the operation of the neural network system.
FIG. 1C shows an example of the operation of the neural network system.
FIG. 2 is a flow diagram of an example process for generating a response to a query.
FIG. 3 is a flow diagram of an example process for training a selection neural network and a task neural network jointly.
FIG. 4 is an example of the performance of the described techniques.
FIG. 5 is an example of the performance of the described techniques.
FIG. 6 is an example of the performance of the described techniques.
FIG. 7 shows an example of the adaptive selection distribution of the described techniques.

Like reference numbers and designations in the various drawings indicate like elements.

DETAILED DESCRIPTION

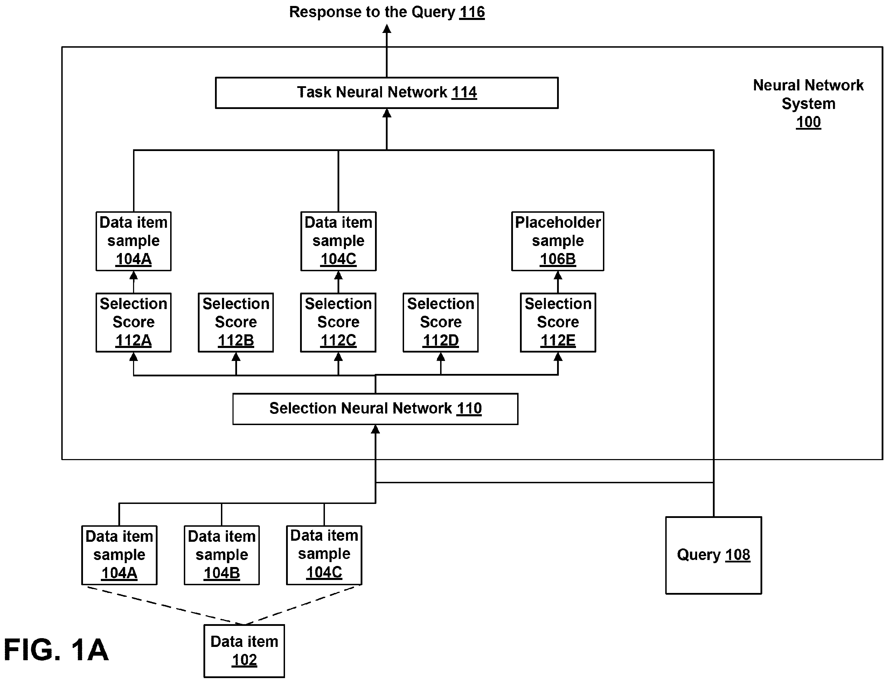

FIG. 1A shows an example neural network system 100. The system 100 is an example of a system implemented as computer programs on one or more computers in one or more locations, in which the systems, components, and techniques described below can be implemented.

The neural network system 100 receives a query 108 relating to a data item 102 that includes multiple data item samples (i.e., data item samples 104A-C) and processes the query 108 and the data item 102 to generate a response to the query 116.

As a particular example, the data item 102 can be a video and the plurality of data item samples 104A-C can be video frames from the video. In this example, the system 100 can perform a video understanding task. One example of such a task is a video question-answering task, where the query 108 represents a question, e.g., a natural language text question, about the video, and the response 116 is a response to the query. Optionally, the query 108 can also include a set of candidate responses ("answers"), e.g., natural language responses, to the question. In this case, the response 116 generated by the system 100 can identify one of the candidate responses.

Examples of video question-answering tasks include: event or action classification (e.g., identifying the action an agent in the video is performing), scene understanding (e.g., identifying the environment or any other greater context that a video takes place in), object detection/localization (e.g., identifying if and where an object is in the video), reasoning (e.g., answering a question regarding the spatial temporal relationship between objects in a video).

Other examples of data items 102 include point cloud sequences, volumetric images, and audio signals, described in more detail below.

In order to generate the response 116, the system 100 adaptively selects a subset of the samples in the data item 102. The selection is referred to as "adaptive" because the subset can include different numbers of samples depending on the query 108 and the data item 102. That is, the system 100 can select different sized subsets when generating responses 116 to different queries 108 and different data items 102.

The system 100 then processes the query 108 and the selected subset of samples using a task neural network 114 to generate the response to the query 108. That is, the task neural network 114 does not process any samples that are not in the selected subset. For example, FIG. 1A illustrates the system processing data item sample 104A, data item sample 104C, and query 108 using the task neural network 114 but not processing the data item sample 104B using the task neural network 114.

In more detail, the system 100 receives a query 108 relating to a data item 102 that has a plurality of data item samples 104A-C.

The system 100 then processes the query 108 and the plurality of data item samples 104A-C using a selection neural network 110 to generate a set of selection scores 112A-C. The set of selection scores 112A-C includes a respective selection score for each of the plurality of data item samples (i.e., selection score 112A for data item sample 104A, selection score 112B for data item sample 104B, and selection score 112C for data item sample 104C). As will be described in more detail below, the set of scores can also include a respective score for each of a set of placeholder samples (also referred to as "CTRL tokens" or "control tokens"). The selection scores for placeholder samples implicitly define the placeholder samples, as in the placeholder samples are not part of the data item 102 and the system cannot select them to be processed using the downstream task neural network 114. For example, in FIG. 1A the selection neural network 110 generates selection scores 112A-C for data item samples 104A-C but also generates selection scores 112D-E that are for placeholder samples that are not part of the data item 102. Also, while an arrow from selection score 112E to placeholder sample 106B is depicted in FIG. 1A, the system does not select the placeholder sample 106B to be processed using the task neural network 114, as will be described below.

The system 100 then selects, using the set of selection scores, a subset of the plurality of data item samples 104A-C that has an adaptive number of data item samples that is less than a total number of data item samples in the plurality of data item samples 104A-C. As described above, the number of data items is referred to as "adaptive" because the subset can include different numbers of data items for different combinations of input query 108 and input data item 102. As a particular example, the system 100 can select a subset that includes any number of samples that is greater than or equal to a minimum number of samples and less than or equal to a maximum number of samples.

For example, the system 100 can identify the k highest scoring samples among the data item samples 104A-C and the placeholder samples (i.e., placeholder sample 106A and another placeholder sample corresponding to selection score 112 not depicted), and then select, from among the k identified samples, only the data item samples as the subset of data item samples. For example, FIG. 1A illustrates that the system 100 identifies the $k=3$ highest scoring samples as the data item sample 104A, the data item sample 104C and the placeholder samples 106A, and then selects, from among the $k=3$ identified samples, only the data item sample 104A and data item sample 104B as the subset of data item samples.

The system 100 then processes the query 108 and the selected subset of data item samples (i.e., data item sample 104A and data item sample 104B) using a task neural network 114 to generate a response to the query 116.

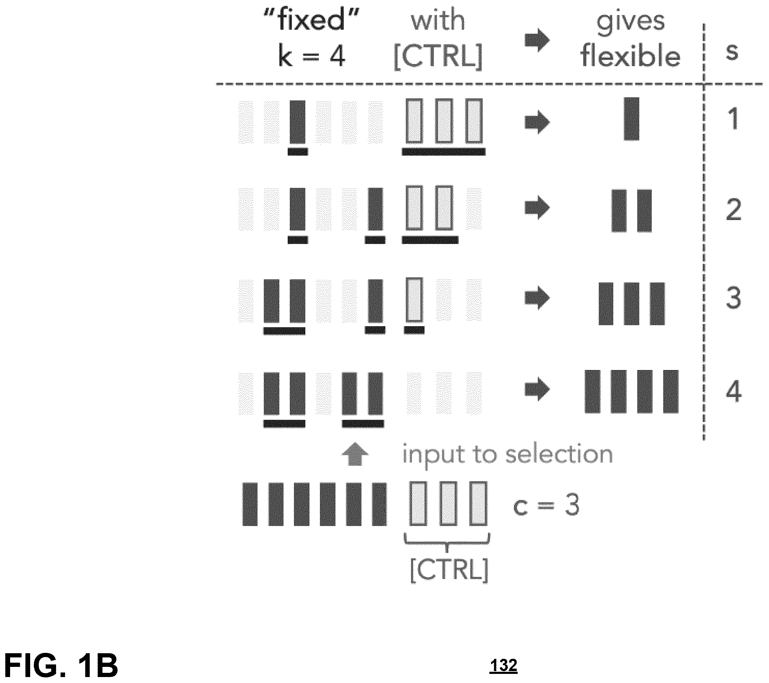

FIG. 1B shows an example 132 of the operation of the neural network system 100 when the data item 102 includes six data item samples (represented as dark rectangles) and there are three placeholder samples (represented as light rectangles).

In particular, as illustrated by the rows labeled under column "s" as 1, 2, 3, and 4, example 132 shows that the system 100 can adaptively select a subset of the samples in the data item 102 to be 1, 2, 3, or 4 data item when the system identifies $k=4$ highest scoring samples that includes 3, 2, 1, or 0 placeholder samples (i.e., CTRL tokens) respectively.

Example 132 illustrates how the placeholder samples help achieve the adaptive selection of data item samples. For the adaptive selection of data item samples depicted by example 132, the placeholder samples serve as baselines that data item samples must be more relevant to the query than in order to have respective scores that are included in the highest scores. Because the selection scores of the data item samples and placeholder samples are unique on a data item - query pair basis and therefore the number of highest scoring samples that are placeholders will vary, the placeholder samples enable adaptive selection of data item samples on a case-by-case data item-query pair basis.

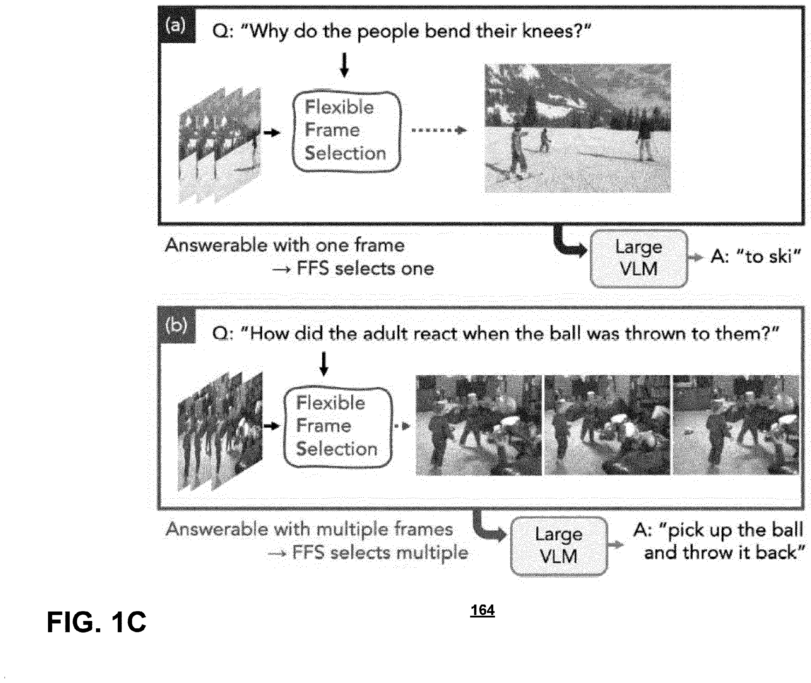

FIG. 1C shows an example 164 of the operation of the neural network system 100 for two different query 108 - data item 102 pairs (labeled as boxed elements "(a)" and "(b)"), where, for both pairs, the data item 102 is a video, the query 108 is a natural language text question regarding the respective video data item 102, and the task the task neural network 114 (labeled as "large VLM" in FIG. 1C) performs is question-answering.

Although the task for both query 108 - data item 102 pairs is the same, example 164 illustrates that the system 100 only selects one data item sample (i.e., video frame) to perform the question-answering task for the first query 108 - data item 102 pair (i.e., boxed element "(a)"). While, for the second query 108 - data item 102 pair, the system selects three data item samples (i.e., boxed element "(b)").

Thus, example 164 illustrates the system 100 adaptively selects which samples and how many samples will be processed by the task neural network 114 for a given input (i.e., data item 102 and query 108).

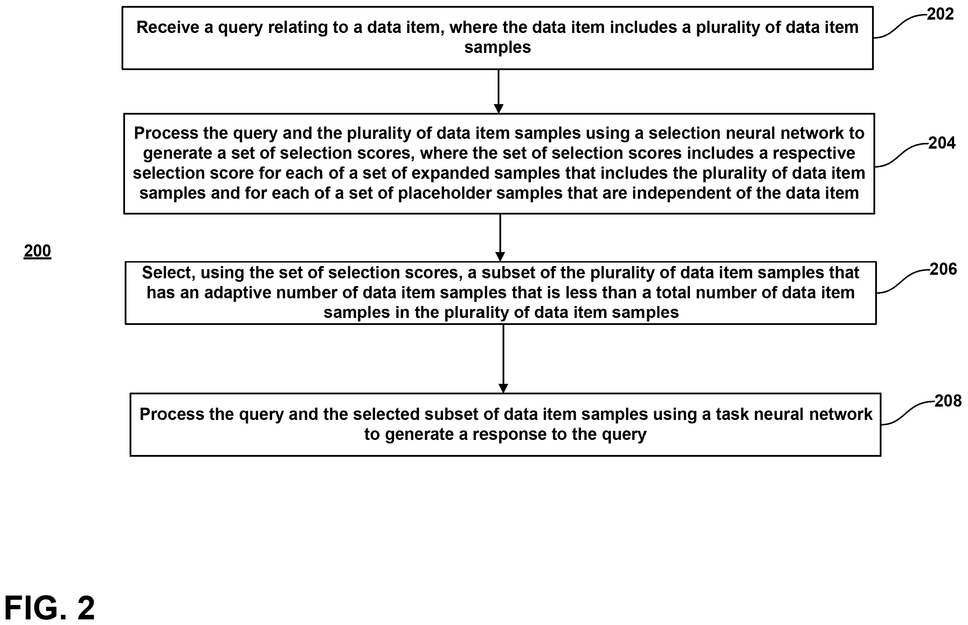

FIG. 2 is a flow diagram of an example process 200 for generating a response to a query. For convenience, the process 200 will be described as being performed by a system of one or more computers located in one or more locations. For example, a neural network system, e.g., the neural network system 100 of FIG. 1, appropriately programmed in accordance with this specification, can perform the process 200.

The system receives a query relating to a data item, where the data item includes a plurality of data item samples (step 202).

The data item can have any of a variety of types of modalities (e.g., text, image, video, audio, any combination of these, and so on).

For example, the data item can be a large document (e.g., a book, an essay, an article, and so on) and the plurality of data item samples can be portions of the large document (e.g., sentences, paragraphs, pages, chapters, and so on).

As another example, the data item can be an image (e.g., a panoramic image, 360 degree image, camera captured image, synthetic image, and so on) and the plurality of data item samples can be portions of the image (e.g., blocked portions of the image, segmentations of the image, and so on). The image data may be provided as, for example, edges or pixel attributes, with the data item samples providing a subset of these features for a portion of the image.

As another example, the data item can be an audio signal (e.g., audio waveform signal, audio spectrogram, and so on) and the plurality of data item samples are audio samples (e.g., windows of the audio waveform signal, portion of the audio spectrogram). The audio samples may represent a division of the audio signal in, for example, time and/or frequency.

As another example, the data item can be a video (e.g., camera recorded video, synthetic video, screen recordings, and so on) and the plurality of data item samples can be video frames from the video or groups of video frames from the video. For each video frame, data may include, for example, edges or pixel attributes for that frame.

As another example, the data item can be a combination of video and audio data, and the plurality of data item samples can be video frames with corresponding audio clips.

As another example, the data item can be a combination of video, audio, and text (e.g., a video sound recording with closed captions), and the plurality of data item samples can be video frames with corresponding sound clips and portions of text.

As another example, the data item can be a sequence of point clouds and the plurality of data item samples are respective point clouds from the sequence. For example, the data item can be a sequence of point clouds produced by LiDAR sensors on a moving vehicle as the vehicle moves. As another example, the data item can be a sequence of point clouds produced by a robot's LiDAR sensors as the robot performs a task.

As another example, the data item can be a volumetric image and the plurality of data item samples are respective image slices from the volumetric image. For example, the data item can be a volumetric image generated using imaging equipment such as MRI images, CT images, electron tomography images, and so on. As a particular example, the data item can be a volumetric image that is an MRI scan of a patient's head, for which the data item samples are 2D image slices of cross sections of the patient's head (that collectively represent a 3D image of the patient's head).

The query can be for any of a variety of tasks and can have any of a variety of types of modalities (e.g., text, image, video, audio, any combination of these, and so on). For example, the query can be for a classification task related to the data item. Classification tasks may be classification tasks suited to the provision of information about the content of the data items or data samples. For example, classification tasks include object classification tasks, activity classification tasks, event identification, speaker identification and/or speech recognition tasks. In general, the task neural network may be configured to perform the task associated with the query to generate an associated output.

For example, the query can be for an understanding task regarding the data item, for which case the response to the query is an output for the understanding task.

In some cases, the query can be a query for a video understanding task, for which case the response to the query is an output for the video understanding task.

For some of these cases, the video understanding task is a video question answering task, where the query represents a question about the video, and the response is a response to the question represented by the query. As a particular example, the data item can be a video with data item samples that are video frames (e.g., a video of people skiing), the query can be a natural language question regarding the video data item (e.g., "Why do the people bend their knees?"), and the response can be a natural language text answering the query's question (e.g., "to ski").

In some cases, the query can be a query for a natural language text understanding task, for which case the response to the query is an output for the natural language text understanding task.

For some of these cases, the text understanding task can be a question-answering task, where the query represents a question about the text, and the response is a response to the question represented by the query. As a particular example, the data item can be a book with data item samples that are pages of the book, the query can be a natural language question regarding a key plot point of the book's story, and the response can be a natural language text answering the query's question (e.g., "What clue does the detective use to solve the mystery?").

In some cases, the query can be a query for an audio understanding task, for which case the response to the query is an output for the audio understanding task.

For some of these cases, the audio understanding task can be a question-answering task, where the query represents a question about the audio, and the response is a response to the question represented by the query. As a particular example, the data item can be an audio signal of a speech with data item samples that are samples of the audio signal, the query can be a natural language question regarding an audio signal of speech (e.g., "What genre of music is this?", and "What tone does the speaker have while delivering the speech"), and the response can be a natural language text answering the query's question.

Other examples of audio question-answering tasks include: speaker classification (e.g., identifying the speakers in an audio sample), event identification (e.g., identifying an event characterized by audio, e.g., an alarm sounding), speech recognition (e.g., identifying spoken commands, e.g., "turn the room lights off"), and so on.

In some cases, the query can be a query for an image understanding task, for which case the response to the query is an output for the image understanding task.

For some of these cases, the image understanding task can be a question-answering task, where the query represents a question about the image, and the response is a response to the question represented by the query. As a particular example, the data item can be an image of a scene with data item samples that are blocked portions of the image (i.e., grouped pixels of the image), the query can be a natural language question regarding the content of the image (e.g., "How many dogs are in the image?", "What geographic location was this image taken?", and "Is there an object similar to <QUERY IMAGE> in the image?"), and the response can be a natural language text answering the query's question.

Other examples of image question-answering tasks include: object classification (e.g., identifying the class an image belongs to, e.g., pet dog vs cat vs lizard), object detection (e.g., identifying tumors in a medical image or identified improperly parked cars), image text detection (e.g. identifying written text present in the image, e.g., a street signs or building numbers and names), scene understanding (identifying the environment or any other greater context that the image has) and so on.

In some cases, the query can be a query for a point cloud understanding task, for which case the response to the query is an output for the point cloud understanding task.

For some of these cases, the point cloud understanding task (i.e., a point cloud sequence understanding task) can be a question-answering task, where the query represents a question about the point cloud sequence, and the response is a response to the question represented by the query. As a particular example, the data item can be a point cloud sequence from LiDAR sensors of a vehicle as it moves, the query can be a natural language question regarding the potential object interaction represented in the point cloud (e.g., "How many objects are in the point cloud sequence?", and "Will objects in the point cloud sequence collide if their trajectory of motion continue?"), and the response can be a natural language text answering the query's question.

In some cases, the query for an understanding task that is a question answering task includes a set of candidate answers to the question about the respective data item, and the response identifies one of the candidate answers.

In particular, in some cases, the video understanding task is a video question answering task, the query about the video includes a set of candidate answers to the question about the video, and the response identifies one of the candidate answers. For example, for a video question "Why do the people bend their knees - to jump rope, to sit, or to ski?" regarding a video data item of people skiing, the candidate answers to the question include "to jump rope", "to sit", and "to ski". Then, the response identifies the candidate answer "to ski".

In some cases, the video understanding task is a video classification task. The query may identify (or otherwise relate to) a plurality of classes, and the response may identify one or more of the plurality of classes. For example, for a video data item depicting a scene in a city, the query can identify the classes "the city", "the suburb", and "the countryside" through, e.g., a natural language question query "Does the video take place in the city, the suburb, or the countryside?" and the response can identify one of the classes as an answer to the question, e.g., "the city".

In some cases, the plurality of classes includes a plurality of object classes that each represent a different class of object that can be depicted in the video. For example, given a video data item of a public road, the plurality of classes can include the object classes "car", "truck", "bicycle", "motorcycle", and "bus". So, for example, the query can identify the classes through a natural language question query "Which of the of the following objects are present on the road: car, truck, bicycle, motorcycle and bus?", and the response can identify more than one of the classes as an answer to the question, e.g., "car, bus, and bicycle."

In some cases, the plurality of classes include a plurality of action classes that each represent a different class of actions that can be performed by an agent depicted in the video. For example, given a video data item of a triathlete (i.e., an agent) racing, the plurality of classes can include the action classes "swimming", "running", and "cycling". So, for example, the query can identify the classes through, e.g., a natural language question query "What is the triathlete doing - swimming, running, or cycling?" and the response can identify one of the action classes, e.g., "running".

In some cases, the audio understanding task is an audio question answering task, the query about the audio includes a set of candidate answers to the question about the audio, and the response identifies one of the candidate answers.

In some cases, the audio understanding task is an audio classification task. The query may identify (or otherwise relate to) a plurality of classes, and the response may identify one or more of the plurality of classes.

For example, given an audio data item of an audio capture within a room of a house, the plurality of classes can include the classes "a clock alarm", "a fire alarm", and "security system alarm". So, for example, the query can identify the classes through a natural language question query "Which of the of the following alarms is sounding: a clock alarm, a fire alarm, or a security system alarm?", and the response can identify one or more of the classes as an answer to the question, e.g., "a clock alarm."

In some cases, the image understanding task is an image question answering task, the query about the image includes a set of candidate answers to the question about the image, and the response identifies one of the candidate answers.

In some cases, the image understanding task is an image classification task. The query may identify a plurality of classes, and the response may identify one or more of the plurality of classes.

In some cases, the plurality of classes includes a plurality of object classes that each represent a different class of object that can be depicted in the image.

For example, given an image data item of a room in a home being moved into, the plurality of classes can include the object classes "a moving box", "a person", and "furniture". So, for example, the query can identify the classes through a natural language question query "Which of the of the following objects are blocking the exit: a moving box, a person, and furniture?", and the response can identify more than one of the classes as an answer to the question, e.g., "a moving box, and furniture."

The system processes the query and the plurality of data item samples using a selection neural network to generate a set of selection scores, where the set of selection scores includes a respective selection score for each of a set of expanded samples that includes the plurality of data item samples and for each of a set of placeholder samples that are independent of the data item (step 204).

The selection neural network can have any of a variety of neural network architectures. That is, the selection neural network can have any appropriate architecture in any appropriate configuration such that the selection neural network can process the query and the plurality of data item samples to generate a set of selection scores, including fully connected layers, convolutional layers, recurrent layers, attention-based layers, and so on, as is appropriate.

In some cases, the selection neural network includes a selector encoder neural network and a scoring neural network. For these cases, to process the query and the plurality of data item samples using the selection neural network to generate a set of selection scores, the system obtains respective features of each of the data item samples. Then, the system obtains one or more features of the query (which in some cases includes a set of candidate answers). Afterwards, the system processes an encoder input that includes the features of each of the data item samples and the one or more features of the query using the selector encoder neural network to generate an encoder output that includes a respective encoded feature for each of the data item samples. Lastly, the system processes a scoring input that includes the respective encoded features for each of the data item samples using the scoring neural network to generate the set of selection scores.

In some cases, to obtain respective features of each of the data item samples and to obtain one or more features of the query, the system processes each of the data item samples and the query using one or more feature encoder neural networks.

A feature encoder neural network can have any of a variety of neural network architectures. That is, a feature encoder neural network can have any appropriate architecture in any appropriate configuration such that the feature encoder neural network can process the data item sample (or query) as an input to generate a respective feature (or one or more features), including fully connected layers, convolutional layers, recurrent layers, attention-based layers, and so on, as is appropriate. Because the data item sample (or query) can have any of a variety of types of modalities (e.g., text, image, video, audio, and so on), the feature encoder neural network is one that appropriately handles its input's modality (or multi-modality).

For example, for a feature encoder input that is natural language text, the system can map each character, word, or sub-word of the natural language text representation to a corresponding token by applying a text tokenizer to the input text. For example, the system can apply the Byte-Pair Encoding (BPE), WordPiece, or SentencePiece tokenizers to divide the natural language text data into tokens from a vocabulary. The system can then process the token sequence with a feature encoder neural network that is a text encoder (e.g., word2vec, GloVe, or BERT) to generate a sequence of features or a feature (e.g., the output of the CLS token when using BERT as an encoder).

As a result, as a particular example, if the query is natural language text, the system can process the query (e.g., using the wordpiece tokenizer and BERT) to generate and obtain feature(s) of the query using a text encoder.

As another particular example, if a data item sample is natural language text (e.g., a sentence, a paragraph of text, a chapter of text, and so on) the system can process the data item sample (e.g., using the wordpiece tokenizer and the output of the CLS token when using BERT) to generate and obtain a respective feature of the data item sample using a text encoder.

As another example, for audio signal input, the system can convert an audio signal into a spectrogram and map segments (i.e., frequency, time patches of the spectrogram) to corresponding tokens and apply a feature encoder neural network that is an audio encoder neural network, e.g., using w2v-BERT model as described in arXiv:2108.06209, to obtain features for each map segment token.

As a result, for example, if the data item is an audio spectrogram and the data item samples are segments of the spectrogram, the system can generate and obtain a respective feature for each data item sample using an audio encoder.

As another example, for an input that is an image, the system can divide the image into blocks. Then the system can map each block to a corresponding token, e.g., by projecting each block into a token embedding. Then, the system can use a feature encoder neural network that is an image encoder, e.g., using the pre-trained Align encoder (as described in arXiv:2102.05918) or the pre-trained CoCa encoder (as described in arXiv:2205.01917) to process the tokens to generate respective features.

As a result, for example, if the data item is an image and the data item samples are blocked portions of the image, the system can generate and obtain a respective feature for each data item sample by processing each data item sample as described above using an image encoder.

As another example, for an input that is an image, the system can divide an image into blocks and apply the above described process for each image block but then further pool the respective features of each block using e.g., using 'mean pooling' or 'attention pooling' to generate a respective feature for the image. Alternatively, to generate a respective feature for the image, the system can use the feature corresponding to the [CLS] token present in ViT based encoder (e.g., the Align encoder) when processing the blocks of an image using an image encoder.

As a result, for example, if the data item is a volumetric image and the data item samples are image slices, the system can generate and obtain a respective feature for each data item sample by processing each data item sample as described above.

As another example, if the data item is a video and the data item samples are video frames, the system processes each video frame as an image and obtains a respective feature for each data item sample by processing each data item sample as described above.

As another example, for an input that is a video, the system can divide the video into a sequence of video frames and divide each video frame into patches and map each patch to a corresponding token. Alternatively, a token can represent a spatio-temporal portion of the video, i.e., a spatial portion of a group of video frames. The system can then use a feature encoder neural network that is a video encoder neural network, e.g., use the ViViT encoder as described in arXiv:2103.15691, to process the tokens and generate a respective feature for each token. Then, for each video frame (or group of video frames), the system can mean or attention pool the features associated with the corresponding tokens of the video frame (or group of video frames) to obtain a feature for the video frame (or group of video frames).

As a result, for example, if the data item is a video and the data item samples are groups of video frames, the system can generate and obtain a respective feature for each data item sample by processing each data item sample as described above.

As another example, if the data item is a video and the data item samples are video frames, the system can generate and obtain a respective feature for each data item sample by processing each data item sample as described above.

As another example, for an input that is a point cloud, the system can divide the point cloud (i.e., measurements at a set points with x,y,z coordinates) into partitions, e.g., pillars (i.e., points grouped by x-y coordinates, i.e., vertical columns of the point cloud) or windows of grouped 3D voxels of fixed spatial volumes that encompass points. Then the system can process each partition using a point cloud encoder to generate respective features (e.g., using a pointNet encoder for pillars as described in arXiv:1812.05784 or using SWFormer encoder for windows as described in arXiv:2210.07372).

As an example of the system using one or more encoders to obtain respective features of each of the data item samples and to obtain one or more features of the query: for a data item that is a video with data item samples that are video frames and a query that is a natural language question for a video answering-question task, the system processes each of the video frames of the video by applying a feature encoder neural network that is a an image encoder to each video frame to obtain a respective feature for each video frame. Then, the system can process the query that is a natural language question for a video answering-question task using a feature encoder neural network that is a text encoder (e.g., BERT) to obtain multiple features of the query. For this example, the system uses two feature encoder neural networks (i.e., an image encoder and a text encoder).

As described above, the features of each of the data item samples and the one or more features of the query are included in the encoder input, and the system processes the encoder input using the selector encoder neural network to generate an encoder output which includes a respective encoded feature for each of the data item samples.

In some cases, the encoder input further includes respective features of placeholder samples (where the placeholder samples are implicitly defined by their respective features), and the encoder output further includes a respective encoded feature of each of the placeholder samples. That is, the system processes the encoder input using the selector encoder neural network to generate an encoder output which includes a respective encoded feature for each of the data item samples and a respective encoded feature for each of the placeholder samples.

When features of placeholder samples are present in the encoder input, the data item samples and placeholder sample will be collectively referred to as expanded samples.

In some cases, the system initializes each respective feature of the placeholder samples as the mean of the features of the data item samples. That is, the system averages all features belonging to data item samples to generate an average feature. Then, the system initializes each respective feature of the placeholder samples to be this averaged feature.

Further in some cases, the system combines a respective trainable feature with each initialized respective feature of the placeholder samples to generate the features of the placeholder samples. That is, for each placeholder sample, the initialized feature is combined with an independent trainable feature to generate the feature for the placeholder sample. The trainable features are trainable parameters of the selection neural network.

The selector encoder neural network can have any of a variety of neural network architectures. That is, the selector encoder neural network can have any appropriate architecture in any appropriate configuration such that the selector encoder neural network can process an encoder input to generate an encoder output, including fully connected layers, convolutional layers, recurrent layers, attention-based layers, and so on, as is appropriate.

For example, the selector encoder neural network can be an attention-based neural network that includes one or more attention layers. As a particular example, the selector encoder neural network can be a multimodal transformer. For example, the selector encoder neural network can include a decoder-only transformer architecture (such as the Gemma 3 model described in arXiv:2503.19786 or the VideoBert model described in arXiv:1904.01766).

In some cases, the system augments the encoder input by adding trainable position encodings and trainable modality embeddings to indicate the feature modality to the features of each of the data item samples and the one or more features of the query. The modality embedding indicates which modality the respective sample the feature is for, e.g., image modality when the feature corresponds to an image data item sample.

As described above, the scoring input includes the respective encoded features for each of the data item samples, and, when the encoded output includes a respective encoded feature of each of the placeholder samples, the scoring input further includes the respective encoded features for the placeholder samples. The system processes the scoring input using a scoring neural network to generate the set of selection scores (i.e., a respective selection score for every feature of a data item sample and placeholder sample present in the scoring input).

The scoring neural network can have any of a variety of neural network architectures. That is, the scoring neural network can have any appropriate architecture in any appropriate configuration such that the scoring neural network can process a scoring input to generate a set of selection scores, including fully connected layers, convolutional layers, recurrent layers, attention-based layers, and so on, as is appropriate.

In some cases, the scoring neural network is a multi-layer perceptron (MLP). For example, the system can use a scoring neural network that is an MLP to map each of the encoded features of the data item samples of the scoring input to respective logits. As particular examples, the MLP can be a single layer MLP or a single layer MLP followed by a non-linear activation function (e.g., sigmoid, Tanh, or ReLU activation functions).

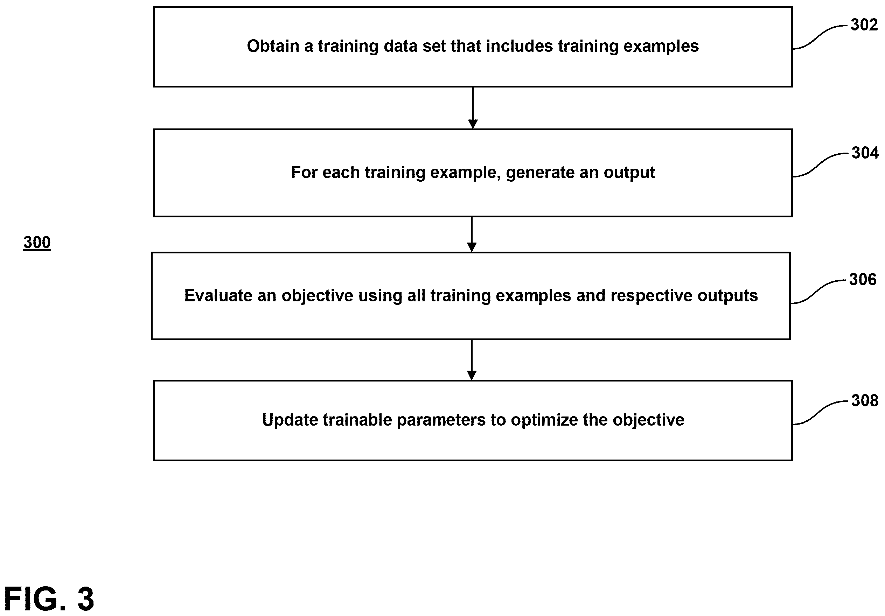

Prior to using the selection neural network, the system (or another system) trains the selection neural network (e.g., determines trained values for: the trainable features of the placeholder samples; positing encoding; the modality encoding; and the parameters belonging to the selector encoder neural network and the selection score neural network). Generally, the selection neural network is trained jointly with the task neural network. Further details of training the selection neural network and the task neural network jointly are described below with reference to FIG. 3.

The system selects, using the set of selection scores, a subset of the plurality of data item samples that has an adaptive number of data item samples that is less than a total number of data item samples in the plurality of data item samples (step 206).

Generally, the respective score of an encoded feature of a data item sample represents how relevant the data item sample is for generating a response to the query. For example, the score can be a logit or probability value representing how likely the data item sample is to be relevant to the system's generation of the response to the query, with higher values indicating higher relevance. That is, because the system generates the scores using encoded features of the data item samples, which in turn are generated using features of both the data item samples and the query, each selection score can reflect how relevant the corresponding data item sample is to a given query.

As described above, the set of selection scores includes a respective selection score for each of a set of expanded samples that includes the plurality of data item samples and for each of a set of placeholder samples that are independent of the data item. For example, as described above, when the system further includes features of placeholder samples in the encoder input for the selector encoder neural network, the system will generate selection scores for each of these placeholder samples.

For some of these cases, as part of step 206, the system identifies, as initial samples, a first set of expanded samples from the set of expanded samples that have the highest selection scores. Then the system selects, as the subset of the plurality of data item samples, each data item sample that is in the first set of expanded samples.

Because the system selects the first set of expanded samples according to the highest scores but then subsequently selects only data item samples present in the first set as the subset of the plurality of data item samples, the placeholder samples serve as filters. That is, when the respective score of any placeholder is such that it is one of the highest scores and is higher than the respective score of any data item sample, the placeholder sample effectively "blocks" any data item sample with a respective lower score from being included in the selected subset of data item samples. For these reasons, the placeholder samples are also referred to as "CTRL tokens" or "control tokens" because their respective scores serve as a "baseline" that the respective score of a data item sample must exceed for the system to select that data item sample to be included in the selected subset of data item samples.

By considering the selection scores associated with placeholder samples that serve as "baselines" when selecting samples with the highest scores, and because the selection scores can reflect a degree of relevance a data item has with the query, the system can advantageously identify only the most relevant data item samples to a query.

In some cases, the first set of expanded samples includes a fixed number of expanded samples that does not vary across different data items and queries. That is, no matter the data item and/or the query, the first set of expanded samples includes a fixed number k of expanded samples (e.g., fixed at $k = 1$, $k = 10$, or $k = 100$ expanded samples). For example, the number of expanded samples included in the first set can be predetermined by a user to be, e.g., $k = 1$, $k = 10$, $k = 100$).

In some cases, the set of placeholder samples includes a fixed number of placeholder samples that does not vary across different data items and queries. That is, no matter the data item and/or the query, the number of placeholder sample c is fixed (e.g., fixed at $c = 1$, $c = 10$, or $c = 100$ placeholder samples). For example, the number of placeholder samples c can be pre-determined by a user, e.g., $c = 1$, $c = 10$, or $c = 100$ placeholder samples.

When the first set of expanded samples includes a fixed number k of expanded samples that does not vary across different data items and queries, and the set of placeholder samples includes a fixed number c of placeholder samples that does not vary across different data items and queries, the values of k and c dictate a range that the number of data items included in the selected subset of data item samples s can be. That is, the maximum value for s occurs when no placeholder samples are included in the first set of expanded samples, i.e., $s = k;$ and the minimum value for s occurs when all placeholder samples are included in the first set of expanded samples, i.e., $s = k - c$. Because the number of data items included in the selected subset of data item samples s has a range and is different for different combinations of input query and input data item, the number of data items included in the selected subset of data item samples s is referred to as "adaptive". Furthermore, because the selected subset of data item samples have selection scores greater than that of any placeholder sample, the selected subset of data item samples are only those most relevant to the query.

The system processes the query and the selected subset of data item samples using a task neural network to generate a response to the query (step 208).

Because the selected subset of data item samples contains fewer data item samples than the data item and only the most relevant data item samples, the computational efficiency of generating a response to the query and the quality of the response to the query are greatly improved. That is, the selected subset of data item samples is a significant reduction of input size for the task neural network when compared to the number of data item samples belonging to the data item. Therefore, the system's use of the task neural network to process the subset of data item samples necessitates much fewer computational operations than when the system processes all data item samples of the data item using the task neural network.

Additionally, the selected subset of data item samples are the most relevant data item samples, and therefore, the performance of the response to the query is better than it would be if the system processed all data item samples belonging to the data item using the task neural network. If the system were to process all data item samples of the data item to generate the response to the query, many irrelevant data item samples to the query would be present, which increases the difficulty of the system generating a relevant response to the query using the task neural network.

Finally, because the size of the selected subset of a data item is adaptive to the query, the system maximizes the quality of generated responses to queries per unit of computational processing.

The task neural network can have any of a variety of neural network architectures. That is, the task neural network can have any appropriate architecture in any appropriate configuration such that task neural network can process the query and the selected subset of data item samples to generate a response to the query, including fully connected layers, convolutional layers, recurrent layers, attention-based layers, and so on, as is appropriate.

In some cases, the task neural network is a pre-trained neural network (i.e., the system or another system has previously determined the values of the trainable parameters of neural network through training on large data sets for one or more general tasks, e.g., next token prediction, image captioning, text-image alignment, and so on).

In some cases, the task neural network is a vision-language model (VLM) neural network. For example, the task neural network can be a CLIP based VLM such as the VLM trained on verb-focused contrastive learning as described in arXiv:2304.06708, or FLAMINGO as described in arXiv:2204.14198. As a particular example, when the data item samples are video frames and the query is natural language text question regarding the video frames that includes candidate answers, the system can use a VLM task neural network to process the video frames (using an image encoder as described above) and query (using a text encoder as described above) to generate logits for each of the candidate answer, where higher values indicate higher likelihood of being the correct answer).

In some cases, the task neural network is a multi-modal language (MLM) neural network that processes a sequence of tokens to generate, as output, a sequence of tokens from a vocabulary. The tokens can represent any modality of data such as text, image, audio, video and so on. For example, the multi-modal language neural networks can be one that belongs to the Gemini family of neural networks.

In some situations, the task neural network can be referred to as an auto-regressive neural network when the task neural network auto-regressively generates an output sequence of tokens. More specifically, the auto-regressively generated output is created by generating each particular token in the output sequence conditioned on a current input sequence that includes any tokens that precede the particular token in the output sequence, e.g., the tokens that have already been generated for any previous positions in the output sequence that precede the particular position of the particular token.

For example, the task neural network can be an auto-regressive Transformer-based neural network that includes (i) a plurality of attention blocks that each apply a self-attention operation and (ii) an output subnetwork that processes an output of the last attention block to generate the score distribution.

In this example, the task neural network can have any of a variety of Transformer-based neural network architectures. Examples of such architectures include those described in J. Hoffmann, S. Borgeaud, A. Mensch, E. Buchatskaya, T. Cai, E. Rutherford, D. d. L. Casas, L. A. Hendricks, J. Welbl, A. Clark, et al. Training compute-optimal large language models, arXiv preprint arXiv:2203.15556, 2022; J.W. Rae, S. Borgeaud, T. Cai, K. Millican, J. Hoffmann, H. F. Song, J. Aslanides, S. Henderson, R. Ring, S. Young, E. Rutherford, T. Hennigan, J. Menick, A. Cassirer, R. Powell, G. van den Driessche, L. A. Hendricks, M. Rauh, P. Huang, A. Glaese, J. Welbl, S. Dathathri, S. Huang, J. Uesato, J. Mellor, I. Higgins, A. Creswell, N. McAleese, A.Wu, E. Elsen, S. M. Jayakumar, E. Buchatskaya, D. Budden, E. Sutherland, K. Simonyan, M. Paganini, L. Sifre, L. Martens, X. L. Li, A. Kuncoro, A. Nematzadeh, E. Gribovskaya, D. Donato, A. Lazaridou, A. Mensch, J. Lespiau, M. Tsimpoukelli, N. Grigorev, D. Fritz, T. Sottiaux, M. Pajarskas, T. Pohlen, Z. Gong, D. Toyama, C. de Masson d'Autume, Y. Li, T. Terzi, V. Mikulik, I. Babuschkin, A. Clark, D. de Las Casas, A. Guy, C. Jones, J. Bradbury, M. Johnson, B. A. Hechtman, L. Weidinger, I. Gabriel, W. S. Isaac, E. Lockhart, S. Osindero, L. Rimell, C. Dyer, O. Vinyals, K. Ayoub, J. Stanway, L. Bennett, D. Hassabis, K. Kavukcuoglu, and G. Irving. Scaling language models: Methods, analysis & insights from training gopher. CoRR, abs/2112.11446, 2021; Colin Raffel, Noam Shazeer, Adam Roberts, Katherine Lee, Sharan Narang, Michael Matena, Yanqi Zhou, Wei Li, and Peter J Liu. Exploring the limits of transfer learning with a unified text-to-text transformer. arXiv preprint arXiv:1910.10683, 2019; Daniel Adiwardana, Minh-Thang Luong, David R. So, Jamie Hall, Noah Fiedel, Romal Thoppilan, Zi Yang, Apoorv Kulshreshtha, Gaurav Nemade, Yifeng Lu, and Quoc V. Le. Towards a human-like open-domain chatbot. CoRR, abs/2001.09977, 2020; and Tom B Brown, Benjamin Mann, Nick Ryder, Melanie Subbiah, Jared Kaplan, Prafulla Dhariwal, Arvind Neelakantan, Pranav Shyam, Girish Sastry, Amanda Askell, et al. Language models are few-shot learners. arXiv preprint arXiv:2005.14165, 2020.

Generally, to apply the self-attention operation, each attention block uses one or more attention heads. Each attention head generates a set of queries, a set of keys, and a set of values, and then applies any of a variety of variants of query-key-value (QKV) attention, e.g., a dot product attention function or a scaled dot product attention function, using the queries, keys, and values to generate an output. Each query, key, value can be a vector that includes one or more vector elements. When there are multiple attention heads, the attention block then combines the outputs of the multiple attention heads, e.g., by concatenating the outputs and, optionally, processing the concatenated outputs through a linear layer.

As a particular example, when the data item samples are video frames with respective audio clips and the query is natural language text question that includes candidate answers, the system can use a MLM task neural network to process the video frames (using an image encoder as described above) the audio clips (using an audio encoder as described above) and query (using a text encoder as described above) to generate logits for each of the candidate answer, where higher values indicate higher likelihood of being the correct answer).

In some cases, the task neural network is a language model (LM) neural network that processes a sequence of tokens selected from a vocabulary of tokens to generate, as output, a sequence of tokens from the vocabulary.

As a particular example, when the data item samples are video frames and the query is natural language text question regarding the video frames that includes candidate responses, the task neural network can include a visual captioner (i.e., neural network that process a video frame image and generates a text caption, e.g., clip-level visual captioner, e.g., BLIP2, LaViLa, LLaVA) coupled with a language model (e.g., a language model belonging to the Gemma family of neural networks, e.g., Gemma 2 Large). Then, for this particular example, the system can process the text caption of each data item sample along with the text query using the LM task neural network to generate a response to the query that identifies one of the candidate responses.

Prior to using the task neural network, the system (or another system) trains the task neural network. Generally, the system trains the selection neural network and the task neural network j ointly in an end-to-end manner through the application of a task objective designed to optimize performance of the system for the task. Further details of training the task neural network are described below with reference to FIG. 3.

FIG. 3 is a flow diagram of an example process 300 for training a selection neural network and a task neural network jointly. For convenience, the process 300 will be described as being performed by a system of one or more computers located in one or more locations. For example, a neural network system, e.g., the neural network system 100 of FIG. 1, appropriately programmed in accordance with this specification, can perform the process 300.

The system can repeatedly perform the following described example process using training examples to update the trainable parameters of the selection neural network and the task neural network from scratch, i.e., train from randomly initialized values, or further train from pre-trained values.

The system obtains a training data set that includes training examples (step 302). The system can receive the training dataset from any of a variety of appropriate sources, e.g., a user, another system, system data repository, and so on.

Each training example includes a training data item, a training query, and a target response to the training query. The target response to the training query is the expected response to the training query.

For example, a training data set can include: training data items that are videos of various actions and events that encompass human subjects, animals, objects, and natural phenomena; respective training queries for a question-answering task that are natural language questions and that each include a set of candidate answers to the question regarding the content of the video data item; and a target response to the training query that identifies the candidate answer that correctly answers the question.

The system, for each training example, generates an output (step 304). In other words, the system, for each training example in the training data set, processes the training data item and training query to generate a training response to the training query, e.g., as described above for example process 200.

For example, following the above example training data set, the system, for each video training data item - natural language question training query pair (where the query includes a set of candidate answers), can generate a training response to the training query that identifies one of the candidate answers.

The system evaluates an objective using all training examples and respective outputs (step 306). In particular, the objective generally includes a loss for each training example.

For example, the objective can be the average loss over all training examples, with optional regularization terms (e.g., the L-1 (LASSO regularization) and L-2 (ridge regression regularization) variants of the L-p norm.)

The loss can include, for example, a task-specific loss (i.e., a loss that measures a quality of a training response generated by the task neural network in response to the respective training query relating to training data item). So, in some cases, the system trains the task neural network and the selection neural network jointly on a loss function that measures a quality of training responses generated by the task neural network in response to training queries relating to training data items.

For example, following the above example generation of outputs for training examples that include a target response that identifies a correct candidate answer and where the generated training response identifies a candidate answer, the loss for each training example can be the cross-entropy between the identified candidate answer of the training response and the correct candidate answer of the target response across all the candidate answers.

Training using a task-specific loss improves the selection neural network's ability to select only the most relevant training data item samples for each training query because the task-specific loss measures the quality of the training response generated by the task neural network and the task neural network training response depends on the selected training data item samples of the training data item for the training query. Selecting too few data item samples omits useful data item samples for the task neural network, and selecting too many data item samples introduces noise, both of which worsen the task neural network's ability to generate an appropriate response to a query. As a result, training to minimize the task-specific loss updates the trainable parameters of the selection neural network to adaptively determine, per query, how many and which data item samples are most relevant to the query.

The loss can also include an auxiliary loss. For example, in addition to the task-specific loss described above, the loss can include an auxiliary loss such as

$$L_{\text{aux}} = \text{Dist}(p(v'_{\text{top}*}), p(c'_*))$$ for each training example, where $p(v'_{\text{top}*})$ represents the average encoded features of the smallest set of training data item samples with the highest selection scores needed for the task neural network to generate a training response to the training query that matches the target response, $p(c'_*)$ represents the average encoded features of all the trainable placeholder samples, and Dist($\cdot$) is a distance function (e.g., L2 norm).

In some cases, for the above example, the average that $p(v'_{\text{top}*})$ represents can include additional highest scoring training data item samples beyond the minimum described above. For example, the $p(v'_{\text{top}*})$ can represent the average encoded features of one, two, or three additional highest scoring training data item samples to the smallest set of training data item samples with the highest selection scores needed for the task neural network to generate a training response to the training query that matches the target response. This example auxiliary loss results in updates to trainable features of the placeholder samples so that, on average the resulting selection scores of placeholder samples lie just below the scores of informative data item samples, making the placeholder samples reliable baselines for selecting the data item samples.

The system updates trainable parameters to optimize the objective (step 308). The system updates the trainable parameters of the language model neural network to optimize the objective in any variety of ways, e.g., gradient based method, evolutionary algorithm-based method, Bayesian optimization, grid search, and so on.

For example, the system can optimize the objective by minimizing the loss of one or more training examples described above using any of a variety of gradient descent techniques (e.g., batch gradient descent, stochastic gradient descent, or mini-batch gradient descent) that include the use of a backpropagation technique to estimate the gradient of the loss with respect to trainable parameters and to update the trainable parameters accordingly.

In some cases, while jointly training the selection neural network and the task neural network, the system backpropagates gradients through the task neural network and into the selection neural network using a straight-through estimator (STE).

For example, the system can make the selection of the first set of expanded samples according to the highest scores that includes $k$ samples a differentiable operation by generalizing the Gumbel-Max straight-through estimator (STE) trick for Top-1 selection to $k$ values (as described in arXiv:1903.06059 and arXiv:1411.0030). That is, during the generation of the training response, the system adds noise from the Gumbel(0,1) distribution to the output logits of the selection neural network for candidate answers to obtain perturbed logits before selecting the top-k samples. Then, during backpropagation, the gradients flow through as the original logits, as a first-order approximation. Through this formulation, the system can use the task loss to learn what training data item samples are worth selecting given training examples, without needing explicit training data item sample annotations (e.g., localization labels, which can be expensive to obtain). For example, following the above example generation of outputs for training examples that include a target response that identifies a correct candidate answer and where the generated training response identifies a candidate answer, the task loss is cross entropy over the candidate answer set and the system backpropagates this loss end-to-end to the selection neural network.

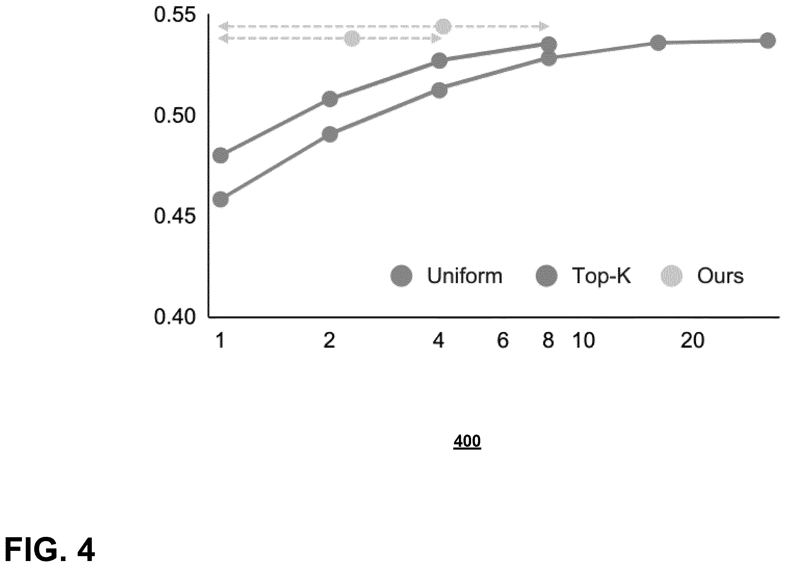

FIG. 4 is an example 400 of the performance of the described techniques.

In particular, example 400 shows a plot of the performance of baseline techniques (i.e., the points labeled "uniform" and "top-k") and the described techniques (i.e., the points labeled "ours"). That is, the y-axis indicates the accuracy rate of generated responses to respective queries including the correct candidate answer, while the x-axis indicates the number of selected data item samples on a log scale.

The baseline technique labeled "Top-k" selects a fixed pre-determined number of data item samples to be processed using a task neural network (along with a corresponding query) to generate a response to the query that identifies a candidate answer present in the query.

The baseline techniques labeled "uniform" first uniformly downsamples the data item samples of the data item then selects a fixed pre-determined number of data item samples to be processed using a task neural network (along with a corresponding query) to generate a response to the query that identifies a candidate answer present in the query.

The technique labeled "ours" includes the described techniques, e.g., that allows for achieving the noted advantages and addressing certain limitations, and is present in the plot in two variants.

For the first variant, the range that the number of data items included in the selected subset of data item samples s can be is s = [1,4]. The corresponding point in the plot is at the average number of selected data items (i.e., ~2) and the horizontal dashed arrows indicate the range that s can be.

For the second variant, the range that the number of data items included in the selected subset of data item samples s can be is s = [1,8]. The corresponding point in the plot is at the average number of selected data items (i.e., ~4) and the horizontal dashed arrows indicate the range that s can be.

Example 400 shows that the described techniques both utilize fewer data item samples and generate more accurate responses to respective queries. That is, the points labeled "ours" lie higher on the y-axis and more to the left of the x-axis. For example, the second variant of the described techniques achieve an accuracy rate of ~55% by selecting on average ~4 data item samples, whereas baseline techniques achieve lower accuracies using more data item samples (e.g., the "top-K" technique selecting the 8 highest scoring data items performs worse, and the "uniform" technique selecting more than 20 highest scoring data items performs worse).

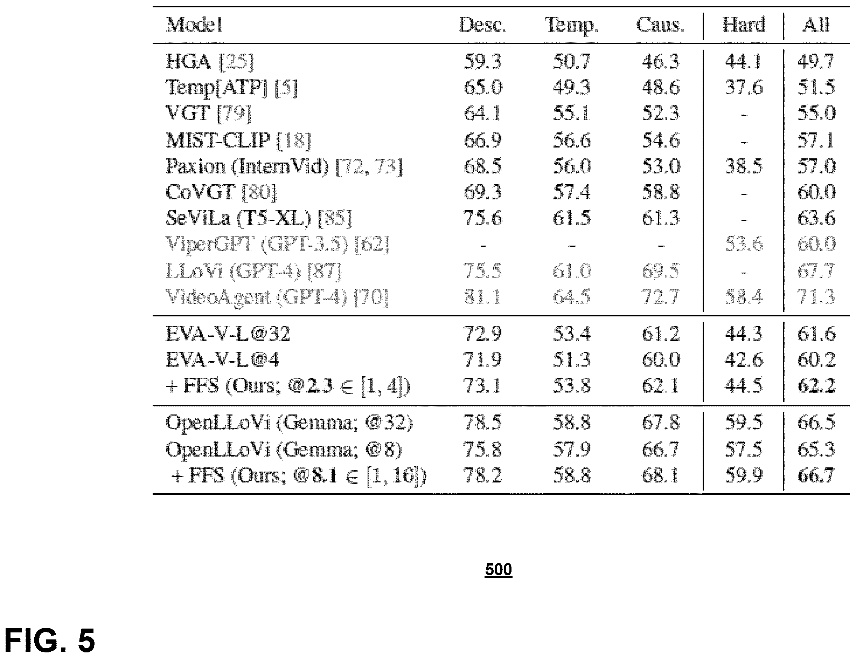

FIG. 5 is an example 500 of the performance of the described techniques.

In particular, example 500 shows a table that summarizes the performance of the described techniques and many baseline techniques in terms of accuracy of generating a response that identifies the correct candidate answer to a query that is a question-answering task natural language question that includes the candidate answers. The data items are videos, and the data items and queries belong to the NExT-QA data set (as described in arXiv:2105.08276). The NExT-QA data set is focused on characterizing the ability of techniques to effectively answer questions regarding videos across three types: causal (C), temporal (T) and descriptive (D). Each video clip contains one question and 5 candidate answers. The NExT-QA data set aims to provide broad coverage on types of event reasoning. The reported accuracy is on a validation set of 4996 data item-query pairs, divided into subsets ("Desc.", "Temp.",

"Caus.", "Hard", "All"). The "Hard" column refers to video data item - question query pairs that cannot be answered by a single frame. While the "Desc.", "Temp.", "Cause." refers to video data item - question query pairs that belong to the type of descriptive, temporal and causal respectively. The column labeled "All" is over all video data item - question query pairs of the validation set. The column labeled "Model" generally defines a task neural network that processes an entire data item and query to generate a response to the query (i.e., baseline techniques), but the exceptions to this are the rows labeled "+FFS" which refer to the described techniques (in which a combination of a selection neural network and task neural network are used to process the data item and query, e.g., as described above). Baseline techniques that use significantly larger, closed-source models are grey. The notation @X denotes number of data item samples (input frames) the task neural network processes, and FFS selection $A \in [B, C]$ indicates an average of A with range [B,C] data item samples.

Example 500 shows the described techniques (i.e. rows that correspond to a model name of "+FFS") offers higher or comparable accuracy on fewer input frames. This finding holds true, even when the task neural network is used independently of the selection neural network for both EVA-V-L and OpenLLoVi.

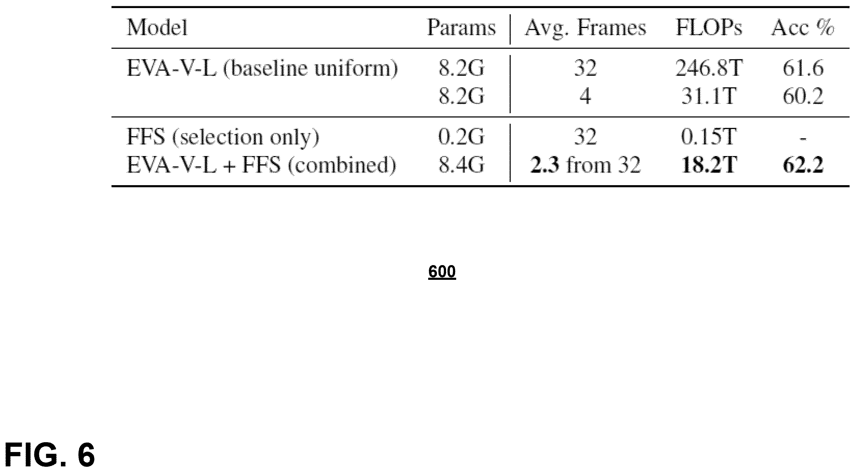

FIG. 6 is an example 600 of the performance of the described techniques.

In particular, example 600 shows a table that the summarizes the computational efficiency and performance of using the described techniques relative to baseline techniques in terms of parameters (i.e., params, i.e., amount of memory in gigabytes (G) the parameters of the technique required), average frames (i.e., Avg. Frames, i.e., the average number of data item sample the techniques processes using the task neural network), floating point operations per second (FLOPs), and accuracy (i.e., Acc%, i.e., the accuracy rate as described above with reference to FIG. 4). The data item - query pairs and tasks for example 600 are those described above for example 500.

The column labeled "models" are labels for the (baseline or described) techniques. The model labeled "EVA-V-L (baseline uniform)" refer to the use of uniform downsampling of the data items and then processing the remaining data item samples and query using task neural network that is the contrastive VLM from VFC (as described in arXiv:2304.06708). Therefore, "EVA-V-L (baseline uniform)" refers to a baseline technique. The model labeled "FFS (selection only)" refers to just the selection neural network of the described techniques. The model labeled "EVA-V-L + FFS (combined)" refers to the described techniques.

The row corresponding to "Model" set to "EVA-V-L (baseline uniform)" and "Avg. Frames" set to 32 refers to processing all 32 data item samples of the data item. The row corresponding to "Model" set to "EVA-V-L (baseline uniform)" and "Avg. Frames" set to 4 refers to processing only 4 of the 32 data item samples of the data item.

Example 500 shows that use of the selection neural network (i.e., the model labeled "FFS") is associated with only a marginal additional memory cost relative to use of the task **neural** network (i.e., the model labeled EVA-V-L) alone. That is, the computational memory required for "EVA-V-L + FFS (combined)" is only 0.2 G (or ~2.5% more memory) more than a baseline that does not include the use of a selection neural network. However, the negligible additional memory cost results in a substantial overall computational efficiency gain. The described techniques (i.e., the row labeled "EVA-V-L + FFS (combined)") results in the task neural network processing on average 2.3 data item samples (as opposed to the 4 or 32 data item samples of the baseline techniques) and so improves 13.5x on downstream frames, FLOPs and accuracy relative to the 4 data item samples baseline.

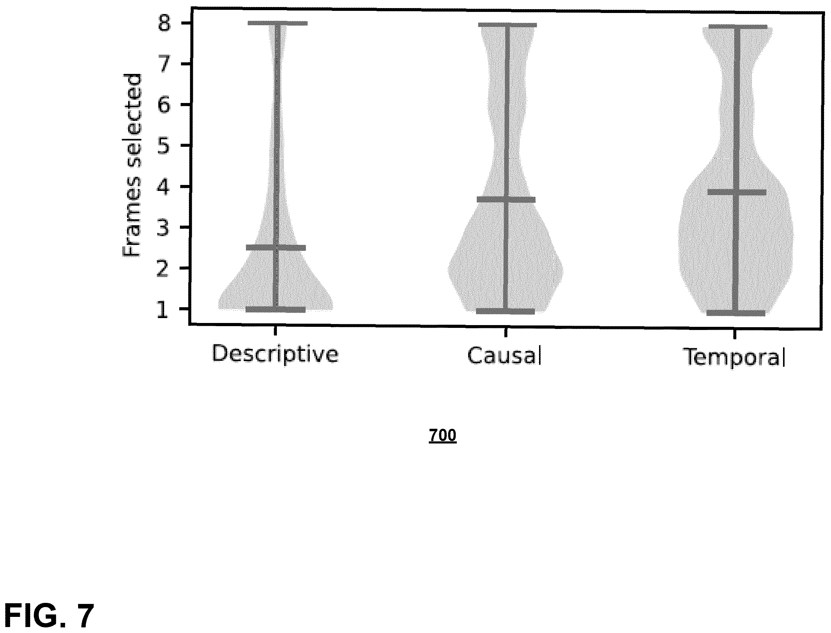

FIG. 7 shows an example 700 of the adaptive selection distribution of the described techniques.

In particular, example 700 is a "beeswarm density plot" showing the number of data item samples selected (i.e., the y-axis) by the described techniques to be processed by the task neural network for video data item - natural language question query pairs and question-answering tasks. The data item - query pairs fall under the categories of "Descriptive", "Causal", and "Temporal" (i.e., the x-axis categories). The data item - query pairs belong to the NExT-QA data set as described above for example 500.

Example 700 shows that the adaptive selection distribution for adaptive data item sample selection that ranges from [1, 8] corresponds with different question types in NExT-QA: descriptive questions are often answerable with fewer data item samples, while more complex causal and temporal questions require additional data item samples. The described techniques are able to adapt the number of data item samples selected based on the needs of the query/task, maximizing performance relative to computational cost.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. In some cases, multitasking and parallel processing may be advantageous.

The following clauses form part of the present disclosure:

1. A method performed by one or more computers, the method comprising:

receiving a query relating to a data item, the data item comprising a plurality of data item samples;
processing the query and the plurality of data item samples using a selection neural network to generate a set of selection scores, the set of selection scores comprising a respective selection score for each of a set of expanded samples that includes the plurality of data item samples and for each of a set of placeholder samples that are independent of the data item;
selecting, using the set of selection scores, a subset of the plurality of data item samples that has an adaptive number of data item samples that is less than a total number of data item samples in the plurality of data item samples; and
processing the query and the selected subset of data item samples using a task neural network to generate a response to the query.

2. The method of clause 1, wherein the data item is a video and the plurality of data item samples are video frames from the video.

3. The method of clause 2, wherein the query is a query for a video understanding task and wherein the response is an output for the video understanding task.

4. The method of clause 3, wherein the video understanding task is a video question answering task, the query represents a question about the video, and the response is a response to the question represented by the query.

5. The method of clause 4, wherein the query comprises a set of candidate answers to the question about the video and the response identifies one of the candidate answers.

6. The method of any one of clauses 3 to 5, wherein the video understanding task is a video classification task.

7. The method of clause 6, wherein the query identifies a plurality of classes, and the response identifies one or more of the plurality of classes.

8. The method of clause 7, wherein the plurality of classes comprise a plurality of object classes that each represent a different class of object that can be depicted in the video.

9. The method of clause 7 or 8, wherein the plurality of classes comprise a plurality of action classes that each represent a different class of actions that can be performed by an agent depicted in the video.

10. The method of any one of the preceding clauses, wherein the data item is an audio signal and the plurality of data item samples are audio samples.

11. The method of clause 10, wherein the query is a query for an audio understanding task and wherein the response is an output for the audio understanding task.

12. The method of clause 11, wherein the audio understanding task is an audio classification task.

13. The method of any one of the preceding clauses, wherein the data item is a sequence of point clouds and the plurality of data item samples are respective point clouds from the sequence.

14. The method of clause 13, wherein the query is a query for a point cloud understanding task and wherein the response is an output for the point cloud understanding task.

15. The method of clause 14, wherein the point cloud understanding task is a point cloud classification task.

16. The method of any one of the preceding clauses, wherein the data item is a volumetric image and the plurality of data item samples are respective image slices from the volumetric image.

17. The method of clause 16, wherein the query is a query for an image understanding task and wherein the response is an output for the image understanding task.

18. The method of clause 17, wherein the image understanding task is an image classification task.

19. The method of any one of the preceding clauses, wherein selecting, using the set of selection scores, a subset of the plurality of data item samples that has an adaptive number of data item samples that is less than a total number of data item samples in the plurality of data item samples comprises:

identifying, as initial samples, a first set of expanded samples from the set of expanded samples that have the highest selection scores; and selecting, as the subset of the plurality of data item samples, each data item sample that is in the first set of expanded samples.

20. The method of clause 19, wherein the first set of expanded samples includes a fixed number of expanded samples that does not vary across different data items and queries.

21. The method of any one of the preceding clauses, wherein the set of placeholder samples includes a fixed number of placeholder samples that does not vary across different data items and queries.

22. The method of any one of the preceding clauses, wherein processing the query and the plurality of data item samples using a selection neural network to generate a set of selection scores comprises:

obtaining respective features of each of the data item samples;
obtaining one or more features of the query;
processing an encoder input that comprises the features of each of the data item samples and the one or more features of the query using a selector encoder neural network to generate an encoder output comprising a respective encoded feature for each of the data item samples; and
processing a scoring input comprising the respective encoded features for each of the data item samples using a scoring neural network to generate the set of selection scores.

23. The method of clause 22, wherein the selector encoder neural network is an attention-based neural network that includes one or more attention layers.

24. The method of clause 22 or 23, wherein the scoring neural network is a multi-layer perceptron (MLP).

25. The method of any one of clauses 22-24, wherein:

the encoder input further comprises respective features of each of the placeholder samples,
the encoder output further comprises a respective encoded feature of each of the placeholder samples, and
the scoring input further comprises the respective encoded features for the placeholder samples.

26. The method of any preceding clause, wherein the task neural network and the selection neural network have been trained jointly on a loss function that measures a quality of training responses generated by the task neural network in response to training queries relating to training data items.

27. The method of clause 26, wherein the joint training comprises backpropagating gradients through the task neural network and into the selection neural network using a straight-through estimator (STE).

28. The method of any preceding clause, when dependent on clause 2, wherein the task neural network is a vision-language model (VLM) neural network.

29. The method of any preceding clause, wherein the task neural network is a multi-modal language (MLM) neural network that processes a sequence of tokens selected from a vocabulary of tokens to generate, as output, a sequence of tokens from the vocabulary.

30. A system comprising one or more computers and one or more storage devices storing instructions that when executed by the one or more computers cause the one more computers to perform the operations of the respective method of any one of clauses **1**-29.

31. One or more computer storage media storing instructions that when executed by one or more computers cause the one more computers to perform the operations of the respective method of any one of clauses 1-29.

**Claims**

1. A method performed by one or more computers, the method comprising:

receiving a query relating to a data item, the data item comprising a plurality of data item samples;
processing the query and the plurality of data item samples using a selection neural network to generate a set of selection scores, the set of selection scores comprising a respective selection score for each of a set of expanded samples that includes the plurality of data item samples and for each of a set of placeholder samples that are independent of the data item;
selecting, using the set of selection scores, a subset of the plurality of data item samples that has an adaptive number of data item samples that is less than a total number of data item samples in the plurality of data item samples; and
processing the query and the selected subset of data item samples using a task neural network to generate a response to the query.

2. The method of claim 1, wherein the data item is a video and the plurality of data item samples are video frames from the video.

3. The method of claim 2, wherein the query is a query for a video understanding task and wherein the response is an output for the video understanding task, optionally wherein the video understanding task is a video question answering task, the query represents a question about the video, and the response is a response to the question represented by the query

4. The method of claim 3, wherein the query comprises a set of candidate answers to the question about the video and the response identifies one of the candidate answers.

5. The method of any one of claims 3 or 4, wherein the video understanding task is a video classification task.

6. The method of claim 5, wherein the query identifies a plurality of classes, and the response identifies one or more of the plurality of classes, optionally wherein the plurality of classes comprise a plurality of object classes that each represent a different class of object that can be depicted in the video and/or wherein the plurality of classes comprise a plurality of action classes that each represent a different class of actions that can be performed by an agent depicted in the video.

7. The method of any one of the preceding claims, wherein:

the data item is an audio signal and the plurality of data item samples are audio samples;
the data item is a sequence of point clouds and the plurality of data item samples are respective point clouds from the sequence; and/or
the data item is a volumetric image and the plurality of data item samples are respective image slices from the volumetric image.

8. The method of claim 7, wherein:

the query is a query for an audio understanding task and the response is an output for the audio understanding task, optionally an audio classification task;
the query is a query for a point cloud understanding task and the response is an output for the point cloud understanding task, optionally a point cloud classification task; and/or
the query is a query for an image understanding task and the response is an output for the image understanding task, optionally an image classification task.

9. The method of any one of the preceding claims, wherein selecting, using the set of selection scores, a subset of the plurality of data item samples that has an adaptive number of data item samples that is less than a total number of data item samples in the plurality of data item samples comprises:

identifying, as initial samples, a first set of expanded samples from the set of expanded samples that have the highest selection scores; and
selecting, as the subset of the plurality of data item samples, each data item sample that is in the first set of expanded samples,
optionally wherein the first set of expanded samples includes a fixed number of expanded samples that does not vary across different data items and queries.

10. The method of any one of the preceding claims, wherein the set of placeholder samples includes a fixed number of placeholder samples that does not vary across different data items and queries.

11. The method of any one of the preceding claims, wherein processing the query and the plurality of data item samples using a selection neural network to generate a set of selection scores comprises:

obtaining respective features of each of the data item samples;
obtaining one or more features of the query;
processing an encoder input that comprises the features of each of the data item samples and the one or more features of the query using a selector encoder neural network to generate an encoder output comprising a respective encoded feature for each of the data item samples; and
processing a scoring input comprising the respective encoded features for each of the data item samples using a scoring neural network to generate the set of selection scores,
optionally wherein the selector encoder neural network is an attention-based neural network that includes one or more attention layers and/or wherein the scoring neural network is a multi-layer perceptron (MLP).

12. The method of claim 11, wherein:

the encoder input further comprises respective features of each of the placeholder samples,
the encoder output further comprises a respective encoded feature of each of the placeholder samples, and
the scoring input further comprises the respective encoded features for the placeholder samples.

13. The method of any preceding claim, wherein the task neural network and the selection neural network have been trained jointly on a loss function that measures a quality of training responses generated by the task neural network in response to training queries relating to training data items, optionally wherein the joint training comprises backpropagating gradients through the task neural network and into the selection neural network using a straight-through estimator (STE).

14. A system comprising one or more computers and one or more storage devices storing instructions that when executed by the one or more computers cause the one more computers to perform the operations of the respective method of any one of claims 1-13.

15. One or more computer storage media storing instructions that when executed by one or more computers cause the one more computers to perform the operations of the respective method of any one of claims 1-13.

FIG. 1A

FIG. 1B

FIG. 1C

```
┌─────────────────────────────────────────────────────────────────────────┐
│ Receive a query relating to a data item, where the data item includes a   │  ─202
│ plurality of data item samples                                            │
└─────────────────────────────────────────────────────────────────────────┘
                                    │
                                    ▼
┌─────────────────────────────────────────────────────────────────────────┐
│ Process the query and the plurality of data item samples using a          │
│ selection neural network to generate a set of selection scores, where the │  ─204
│ set of selection scores includes a respective selection score for each of │
│ a set of expanded samples that includes the plurality of data item        │
│ samples and for each of a set of placeholder samples that are             │
│ independent of the data item                                              │
└─────────────────────────────────────────────────────────────────────────┘
                                    │
                                    ▼
┌─────────────────────────────────────────────────────────────────────────┐
│ Select, using the set of selection scores, a subset of the plurality of   │
│ data item samples that has an adaptive number of data item samples that   │  ─206
│ is less than a total number of data item samples in the plurality of data │
│ item samples                                                              │
└─────────────────────────────────────────────────────────────────────────┘
                                    │
                                    ▼
┌─────────────────────────────────────────────────────────────────────────┐
│ Process the query and the selected subset of data item samples using a    │  ─208
│ task neural network to generate a response to the query                   │
└─────────────────────────────────────────────────────────────────────────┘
```

200

## FIG. 2

EP 4 672 031 A1

**300**

```
┌────────────────────────────────────────────────────────────┐
│                                                            │ ─ 302
│      Obtain a training data set that includes training     │
│                         examples                           │
│                                                            │
└────────────────────────────────────────────────────────────┘
                            │
                            ▼
┌────────────────────────────────────────────────────────────┐
│                                                            │ ─ 304
│         For each training example, generate an output      │
│                                                            │
└────────────────────────────────────────────────────────────┘
                            │
                            ▼
┌────────────────────────────────────────────────────────────┐
│                                                            │ ─ 306
│    Evaluate an objective using all training examples and   │
│                     respective outputs                     │
│                                                            │
└────────────────────────────────────────────────────────────┘
                            │
                            ▼
┌────────────────────────────────────────────────────────────┐
│                                                            │ ─ 308
│      Update trainable parameters to optimize the objective │
│                                                            │
└────────────────────────────────────────────────────────────┘
```

# FIG. 3

400

**FIG. 4**

EP 4 672 031 A1

| Model | Desc. | Temp. | Caus. | Hard | All |
|---|---|---|---|---|---|
| HGA [25] | 59.3 | 50.7 | 46.3 | 44.1 | 49.7 |
| Temp[ATP] [5] | 65.0 | 49.3 | 48.6 | 37.6 | 51.5 |
| VGT [79] | 64.1 | 55.1 | 52.3 | - | 55.0 |
| MIST-CLIP [18] | 66.9 | 56.6 | 54.6 | - | 57.1 |
| Paxion (InternVid) [72, 73] | 68.5 | 56.0 | 53.0 | 38.5 | 57.0 |
| CoVGT [80] | 69.3 | 57.4 | 58.8 | - | 60.0 |
| SeViLa (T5-XL) [85] | 75.6 | 61.5 | 61.3 | - | 63.6 |
| ViperGPT (GPT-3.5) [62] | - | - | - | 53.6 | 60.0 |
| LLoVi (GPT-4) [87] | 75.5 | 61.0 | 69.5 | - | 67.7 |
| VideoAgent (GPT-4) [70] | 81.1 | 64.5 | 72.7 | 58.4 | 71.3 |
| EVA-V-L@32 | 72.9 | 53.4 | 61.2 | 44.3 | 61.6 |
| EVA-V-L@4 | 71.9 | 51.3 | 60.0 | 42.6 | 60.2 |
| + FFS (Ours; @**2.3** $\in [1, 4]$) | 73.1 | 53.8 | 62.1 | 44.5 | **62.2** |
| OpenLLoVi (Gemma; @32) | 78.5 | 58.8 | 67.8 | 59.5 | 66.5 |
| OpenLLoVi (Gemma; @8) | 75.8 | 57.9 | 66.7 | 57.5 | 65.3 |
| + FFS (Ours; @**8.1** $\in [1, 16]$) | 78.2 | 58.8 | 68.1 | 59.9 | **66.7** |

500

# FIG. 5

EP 4 672 031 A1

| Model | Params | Avg. Frames | FLOPs | Acc % |
|---|---|---|---|---|
| EVA-V-L (baseline uniform) | 8.2G | 32 | 246.8T | 61.6 |
| | 8.2G | 4 | 31.1T | 60.2 |
| FFS (selection only) | 0.2G | 32 | 0.15T | - |
| EVA-V-L + FFS (combined) | 8.4G | **2.3** from 32 | **18.2T** | **62.2** |

<u>600</u>

# FIG. 6

700

**FIG. 7**

Europäisches
Patentamt

European
Patent Office

Office européen
des brevets

# EUROPEAN SEARCH REPORT

**Application Number**

EP 25 18 5059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU JIN ET AL: "Video Question Answering With Semantic Disentanglement and Reasoning", IEEE TRANSACTIONS ON CIRCUITS AND SYSTEMS FOR VIDEO TECHNOLOGY, IEEE, USA, vol. 34, no. 5, 19 September 2023 (2023-09-19), pages 3663-3673, XP011969625, ISSN: 1051-8215, DOI: 10.1109/TCSVT.2023.3317447 [retrieved on 2023-09-20] * eqs. 1-7, text around eq. 1class; figures 1,5,7 * * page 3665, column 2, line 1 - line 3 * ----- | 1-15 | INV. G06F16/9032 G06N3/045 G06N3/08 G06V10/82 G06V20/40 G06N3/084 G06N3/09 G06N3/0464 |
| A | US 2024/160853 A1 (LI JUNNAN [SG] ET AL) 16 May 2024 (2024-05-16) * the whole document * ----- | 1-15 | |

| | | | TECHNICAL FIELDS SEARCHED (IPC) |
|---|---|---|---|
| | | | G06F G06N G06V |

The present search report has been drawn up for all claims

| Place of search | Date of completion of the search | Examiner |
|---|---|---|
| The Hague | 16 October 2025 | Karaliolios, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## EP 4 672 031 A1

## ANNEX TO THE EUROPEAN SEARCH REPORT
## ON EUROPEAN PATENT APPLICATION NO.

EP 25 18 5059

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2025

| Patent document cited in search report | Publication date | Patent family member(s) | Publication date |
|---|---|---|---|
| US 2024160853 A1 | 16-05-2024 | US 2024160853 A1 <br> US 2024161520 A1 | 16-05-2024 <br> 16-05-2024 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. HOFFMANN ; S. BORGEAUD ; A. MENSCH ; E. BUCHATSKAYA ; T. CAI ; E. RUTHERFORD ; D. D. L. CASAS ; L. A. HENDRICKS ; J. WELBL ; A. CLARK et al.** Training compute-optimal large language models. *arXiv:2203.15556*, 2022
- **J.W. RAE ; S. BORGEAUD ; T. CAI ; K. MILLICAN ; J. HOFFMANN ; H. F. SONG ; J. ASLANIDES ; S. HENDERSON ; R. RING ; S. YOUNG**. Scaling language models: Methods, analysis & insights from training gopher. *CoRR, abs/2112.11446*, 2021
- **COLIN RAFFEL ; NOAM SHAZEER ; ADAM ROBERTS ; KATHERINE LEE ; SHARAN NARANG ; MICHAEL MATENA ; YANQI ZHOU ; WEI LI ; PETER J LIU**. Exploring the limits of transfer learning with a unified text-to-text transformer. *arXiv:1910.10683*, 2019

- **DANIEL ADIWARDANA ; MINH-THANG LUONG ; DAVID R. SO ; JAMIE HALL ; NOAH FIEDEL ; ROMAL THOPPILAN ; ZI YANG ; APOORV KULSHRESHTHA ; GAURAV NEMADE ; YIFENG LU**. Towards a human-like open-domain chatbot. *CoRR, abs/2001.09977*, 2020
- **TOM B BROWN ; BENJAMIN MANN ; NICK RYDER ; MELANIE SUBBIAH ; JARED KAPLAN ; PRAFULLA DHARIWAL ; PRANAV SHYAM ; GIRISH SASTRY ; AMANDA ASKELL et al.** Language models are few-shot learners. *arXiv:2005.14165*, 2020